Europäisches Patentamt

European Patent Office

Office européen des brevets

(19)

(11) Veröffentlichungsnummer : **0 371 084 B1**

# (12) EUROPÄISCHE PATENTSCHRIFT

(45) Veröffentlichungstag der Patentschrift :
06.11.91 Patentblatt 91/45

(51) Int. Cl.$^5$ : **C07F 5/06**

(21) Anmeldenummer : 89901082.1

(22) Anmeldetag : 19.09.88

(86) Internationale Anmeldenummer :
PCT/EP88/00864

(87) Internationale Veröffentlichungsnummer :
WO 89/02434 23.03.89 Gazette 89/07

(54) **VERFAHREN ZUR HERSTELLUNG VON METHYLALUMOXAN AUS WASSER UND ALUMINIUMTRIMETHYL IN INERTEN KOHLENWASSERSTOFFEN.**

Die Akte enthält technische Angaben, die nach dem Eingang der Anmeldung eingereicht wurden und die nicht in dieser Patentschrift enthalten sind.

(30) Priorität : 20.09.87 DE 3731665

(43) Veröffentlichungstag der Anmeldung :
06.06.90 Patentblatt 90/23

(45) Bekanntmachung des Hinweises auf die Patenterteilung :
06.11.91 Patentblatt 91/45

(84) Benannte Vertragsstaaten :
AT BE DE FR GB IT

(56) Entgegenhaltungen :
EP-A- 0 208 561
EP-A- 0 257 695
EP-A- 0 258 924

(56) Entgegenhaltungen :
Chemical Abstracts, vol. 92, Nr 3, 21 January 1980, (Columbus, Ohio, US), see page 693, abstract 22595y, & PL, P, 102562 (PASYNKIE-WICZ, S. et al.) 15 May 1979
Chemical Abstracts, vol. 100, Nr. 17, 23 April 1984, (Columbus, Ohio, US), Boleslawski, M. et al.: "Investigations of the hydrolisis reaction mechanis of organoaluminum compouns. Proton NMR spectroscopic studies on the R3Al/H2O REACTION IN POLAR SOLVENTS.", see page 660, abstract 139182n, & J. Organomet. Chem. 1983, 255 (3) 269-278

(73) Patentinhaber : SCHERING AKTIENGESELLSCHAFT Berlin und Bergkamen
Ernst-Schering-Strasse 14 Postfach 15 40
W-4709 Bergkamen (DE)

(72) Erfinder : SINN, Hansjörg
Poolstieg 14
W-2000 Norderstedt (DE)
Erfinder : CLAUSNITZER, Dieter
Bernhard-Ihnen-Strasse 12
W-2057 Reinbek (DE)
Erfinder : WINTER, Hergen
Querstrasse 15
W-2085 Quickborn (DE)

EP 0 371 084 B1

## Beschreibung

Alumoxane entstehen bei der kontrollierten Reaktion von Aluminiumalkylen mit Wasser. Typisches Merkmal ist die Verknüpfung zweier, noch organische Reste tragender Aluminiumatome durch ein Sauerstoffatom. Der erste Vertreter der Alumoxane ist das u-Oxo-bis-dialkylaluminium resp. Tetraalkyldialuminiumoxid. Seine Isolierung und Charakterisierung, insbesondere mit Methyl- als Alkylrest, ist bis zum heutigen Tage noch nicht bekannt.

Im allgemeinen führt die Reaktion zwischen Wasser und Aluminiumalkylen - oft unter heftiger Reaktion und auch Flammenerscheinigungen - zur vollständigen Hydrolyse, also zur Bildung von Aluminiumoxid.

Für die vorsichtige, kontrollierte und unvollständige Reaktion zwischen Wasser und Aluminiumalkylen wurden mehrere unterschiedliche Methoden ausgearbeitet. Sie sind publiziert durch (1) E. J. Vandenberg, J. Pol. Sci 47 (1960) 486; (2) N. N. Korneev, A. F. Popov, E. J. Larikov, A. F. Zhigach, G. B. Sakharovskaya, J. Gen. Chem. USSR. 34 (1964) 3425; (3) A. Storr, K. Jones, A. W. Laubengayer, J. Amer. Chem. Soc. 90 (1968) 3173; (4) G. B. Sakharovskaya, N. N. Korneev, A. F. Popov, S. Z. Snegova, A. F. Zhigaih, M. V. Sobolewskii, Brit. 1, 319, 746 (Ch. C08g) 6. Jun. 1973, Appl. 6621/71, 11. Mar. 1971; (5) M. Aoyagi, T. Vada, Y. Tadokoro, S. Horikivi, Jpn. Kokai Tokkyo Koho 79, 64, 600 (Cl. C08g 79/10) 24. May 1979, Appl. 77/131,909 1. Nov. 1977; (6) J. Herwig, Dissertation, Universität Hamburg (1979); (7) H. J. Vollmer, Dissertation, Universität Hamburg (1980); (8) A. Wolinska, J. Organomet. Chem. 234 (1982) 1; sowie (9) M. Boleslawski, J. Serwatowski, J. Organomet. Chem 254 (1983) 159.

Diese Methoden bringen Wasser und Aluminiumalkyle in direkten Kontakt. Sie zielen auf die Darstellung kleiner Mengen für katalytische Untersuchungen. Die Darstellmethoden unterscheiden sich im Träger für das Wasser. Vandenberg (1) bringt Aluminiumalkyle und Wasser ohne Träger zur Reaktion. Sakharovskaya et al. (4) benutzen einen $N_2$-Strom als Schlepper für das zur Reaktion benötigte Wasser. Storr (3) läßt vorsichtig eine Wasser/Benzol-Mischung auf eine stark gekühlte Aluminiumtriäthyl-Vorlage kondensieren. In Hamburg wurde die Molekularsiebmethode erarbeitet (6) (7). Bei dieser Methode dient ein mit Wasser beladenes Molekularsieb als Träger bzw. Wasserquelle.

In Chemicals Abstracts, Band 92, Nr. 3, 21. Januar 1980, wird Wasser in Form einer Emulsion in Toluol zur Herstellung von Tetraalkyldialuminiumoxid verwendet. Diese Methode ist wegen der Bildung unlöslicher Nebenprodukte zur Herstellung eines möglichst einheitlichen, von Feststoffen freien Methylaluminoxans mit guter katalytischer Aktivität nicht geeignet.

Die Gefahr bei der Direktmethode besteht in einem leichten "Durchgehen" der Reaktion. Das Wasser, das mittels eines Trägers in den Reaktor eingebracht wird, ist nur physikalisch an denselben gebunden; aufgrund dessen wird es sehr leicht abgegeben, was eine kontrollierte Reaktion erschwert.

Bringt man das für die partielle Hydrolyse von Aluminiumalkylen benötigte Wasser chemisch gebunden in Form von Salzhydraten ein, so ist eine langsame Kristallwasserabgabe und damit gezügelte Reaktion gewährleistet. Diese Überlegungen führten zur Kristallwassermethode; sie ist publiziert durch (10) G. A. Razuvajev, J. A. Sangolov, J. J. Nelkenbaum, K. S. Minsker, Jzw. Akad. Navk. SSR. Ser. Chim. 19 (1975) 2547; (11) H. Hähnsen, Diplomarbeit, Universität Hamburg (1980), sowie (12) S. R. Rafikov, K. S. Minsker, J. A. Sangalov, J. J. Nelkenbaum, SU-Patent 566 844, C. A. 87 (1977) 152373h.

Weitere Darstellungsmethoden zielen darauf ab, die Al-O-Al-Bindung durch geeignete Wahl von aluminiumorganischen Verbindungen wie Dialkylaluminiumchlorid und Lithiumdialkylaluminat, Alkoxyaluminiumdichlorid, oder Methylmethoxyaluminiumchlorid und Methylaminiumchlorid resp. Ethylaluminiumchlorid zu erhalten. Diese Methoden sind publiziert durch (13) H. Tani, T. Araki, N. Oguni, T. Aoyoagi, N. Ueyama, J. Pol. Sci. Po. Lett. (B) 4 (1966) 97; (14) H. Tani, T. Araki, N. Ogunbi, T. Aoyoagi, N. Ueyama, J. Amer. Chem. Soc. 89 (1967) 173; (15) N. Ueyama, T. Araki, H. Tani, Inorg. Chem. 12 (1973) 2218; (16) W. Kosinska, K. Zardecka, A. Kunicki, M. Boleslawski, S. Pasynkiewicz, J. Organomet. Chem. 153 (1978) 281, sowie (17) W. Kosinska, A. Kunicke, M. Boleslawski, S. Pasynkiwicz, J. Organomet. Chem. 161 (1978) 289.

Durch Reaktion von Aluminiumtrialkylen mit PbO ist ebenfalls die Darstellung von Alumoxanen möglich; so beschrieben von (18) M. Boleslawski, S. Pasynkiewicz, J. Organomet. Chem. 43 (1972) 81.

Zuletzt wurde die Kristallwassermethode verbessert durch Verwenden vorentwässerten Aluminiumsulfats als Wasserlieferant; dies ist publiziert durch (21) H. H. Hähnsen, Dissertation, Universität Hamburg (1984), sowie (22) Kaminsky und Höhnsen, DE-OS 32 40 383).

Die Vorentwässerung ist jedoch aufwendig und etwa entstandenes un- oder schwerlösliches Alumoxan bleibt unerkannt und wird mit dem Kristallbrei verworfen. Eine vollständige Massenbilanzierung der Reaktion ist nahezu unmöglich.

Da die Alumoxane bisher also in größeren Mengen schwer zugänglich sind, sind weder ihre Struktur aufgeklärt noch sind Anwendungsgebiete entwitkelt.

Ziel der vorliegenden Erfindung ist, ein Verfahren zur Produktion von Alumoxanen zu entwickeln, das auch im technischen Maßstab durchgeführt werden kann; womit zu erwarten ist, die Verbilligung von Katalysatorsystemen auf Alumoxanbasis, die Entwitklung von Mischmetalloxanen mit definierten Aluminiumgehalten, der Einsatz von Alumoxanen und Metalloxanen mit Aluminiumgehalten als Katalysatorträger und Ausgangsmaterial für Spezialkeramik.

Bei den hierbei zugrundeliegenden Versuchen, den Direktumsatz von Aluminiumtrialxyl, vorzugsweise Aluminiumtrimethyl, mit Wasser in einem inerten Lösungsmittel wie Toluol zu beherrschen, zeigten sich eine Reihe überraschender Tatsachen:

A) An einer blanken Eisflache, eingetaucht in eine Aluminiumtrimethyllösung, findet eine je nach Temperatur mehr oder weniger starke Gasentwicklung statt. Unmittelbar an der Oberfläche läßt sich eine zur Umgebung und zum Eiskern erhöhte Temperatur feststellen. Entweder beshleunigt sich danach die Reaktion bis zur Unbeherrschbarkeit oder sie kommt zum Erliegen. Die Eisoberfläche hat dann ein mattes Aussehen.

B) Wird eine Eisoberfläche an der die Reaktion zum Erliegen gekommen ist, mit Hilfe eines Stahldrahtes an einzelnen Stellen blank gescheuert, so läßt sich an diesen Stellen wieder Gasentwicklung, bei höherer Temperatur sogar heftige Gaseruptionen, beobachten; die Gasentwicklung kommt aber schnell zum Erliegen. Der Vorgang läßt sich aber immer wieder wiederholen, und zwar bei Temperaturen zwischen 200 und 250°K.

C) Wird eine Eisplatte, an deren Oberfläche in einer Lösung von Aluminiumtrimethyl keine Reaktion mehr beobachtet wurde, in der Lösung zerbrochen, so tritt Gasentwicklung bevorzugt an den Bruchstellen auf.

D) Werden sehr kleine Eisstückchen eingesetzt, so treiben die entstehenden Gasblasen, die sich nicht ohne weiteres von den Eisstückchen lösen, diese in der Lösung nach oben. Sie sammeln sich in einer Schaumschicht. Dort bildet sich ein die Eisbröckchen umhüllendes unlösliches Material. Es ist ein Alumoxan, das weniger als eine Methylgruppe pro Aluminiumatom enthält.

E) Wird mit Hilfe einer stopfbuchslosen Zahnradpumpe die Aluminiumalkyllösung umgepumpt und unter der Oberfläche der Lösung ein gebündelter scharfer Strahl auf die eingebrachte Eisoberfläche gerichtet, so tritt an der Stelle, an der der Strahl auftrifft, offensichtlich auch Reaktion ein; das Eis wurde blank und erfuhr eine Vertiefung.

Aus diesen Tatsachen ergibt sich die folgende Lehre:

a) Es ist notwendig, eine definierte Eisfläche in einer Lösung von Aluminiumalkyl zu erzeugen und durch erodierende Einwirkung reaktionsfähig zu erhalten.

b) Die Teaktionsfähige Oberfläche muß so stark angeströmt werden, daß entstandenes Alumoxan abtransportiert wird und nicht die Möglichkeit hat mit weiterem Wasser aus der Eisoberfläche zu alkylarmen unlöslichen Alumoxan zu reagieren.

c) Die Entstehung kleiner Eispartikel, die mit Gasblasen in die Schaumschicht transportiert werden, ist entweder zu vermeiden oder die Flüssigkeitsumwälzung ist so zu lenken, daß die Partikel aus der Schaumschicht in die Flüssigkeit gerissen werden.

d) Um die Bildung von unlöslichem Alumoxan zu vermeiden, ist es auch zweckmäßig, mit einem Alkylüberschuß (bezogen auf das jeweils verfügbare Wasser) zu arbeiten.

e) Die von der Oberfläche ausgehende Gasentwicklung darf nicht so stark sein, daß die Aluminiumalkyllösung nicht ständing die Oberfläche bespülen und die löslichen Reaktionsprodukte entfernen kann. Dies kann durch die Temperatur der Oberfläche bzw. des Eises kontrolliert werden. Daher ist es zweckmäßig, wenn die Temperatur des Eises unabhängig von der Temperatur der umgebenden Trialkyllösung beeinflußt werden kann. Dies gelingt innerhalb gewisser Grenzen dadurch, daß das Eis sich auf einem gekülten Teller in der Lösung befindet, dessen Kühlung durch einen eigenen Kühlmittelkreislauf bewerkstelligt wird, während ein anderer Kühlmittelkreislauf für die gewünschte Temperatur der Lösung sorgt.

Gegenstand der Erfindung ist ein Verfahren zur Herstellung von Methylaluminoxan, welches dadurch gekennzeichnet ist, daß gefrorenes Wasser in einer Lösung von Aliuminiumtrimethyl in Kohlenwasserstoffen einer erodierenden Einwirkung ausgesetzt wird, die durch mechanische Einwirkung auf die Oberfläche des gefrorenen Wassers oder durch einen oder mehrere die Oberfläche des gefrorenen Wasser überstreichende intensive Flüssigkeitsstrahlen der Reaktionslösung erzeugt wird.

Vorzugsweise erfolgt die mechanische Einwirkung durch schnellrotierende Schlagmesser oder durch reibende und fräsende Werkzeuge auf einer Oberfläche des gefrorenen Wassers.

Eine Ausführungsform des Verfahrens ist dadurch gekennzeichnet, daß als Lösung von Aluminiumtrimethyl in Kohlenwasserstoffen eine 5 - 15 %ige Lösung von Aluminiumtrimethyl in Toluol oder Cumol verwendet wird.

Eine weitere Ausführungsform des Verfahrens ist dadurch gekennzeichnet, daß die Erodierungsgeschwindigkeit und/oder die Kühlgeschwindigkeit so gesteuert werden, daß eine Innentemperatur von 250 °K nicht überschritten wird und vorzugsweise eine Temperatur von 220 bis 240 °K eingestellt wird und eine Temperatur von 190 °K nicht unterschritten wird.

Eine weitere Ausführungsform des Verfahren ist dadurch gekennzeichnet, daß die Erodierungsgeschwindigkeit und/oder die Kühlgeschwindigkeit bei einer Innentemperatur von weniger als 250 °K so gesteuert werden, daß pro Stunde nicht mehr als 0,25 Mol Wasser pro Ltr Lösung erodiert und umgesetzt werden.

Eine weitere Ausführungsform des Verfahrens ist dadurch gekennzeichnet, daß die Mengen an Wasser und an Aluminiumtrimethyl so bemessen werden, daß bei Ende der Reaktion, d. h. nach Verbrauch des gefrorenen Wassers oder bei Beendigung der erodierenden Maßnahmen, noch unumgesetztes Aluminiumtrimethyl zugegen ist, vorzugsweise 10 bis 50 g pro Liter.

Eine weitere Ausführungsform des Verfahrens ist dadurch gekennzeichnet, daß der gewünschte Überschuß an Aluminiumtrimethyl vorgelegt und durch Nachdosieren in dem Maße wie das Aluminiumtrimethyl verbraucht wird, aufrechterhalten wird.

Die Durchführung dieses Verfahrens ist in einer Reihe von Arbeitsvorschriften beispielhaft in den Beispielen beschrieben. Diese belegen für die erfindungsgemäße Arbeitsweise: Sie vermeidet die Bildung unlöslicher Alumoxane fast vollständig; sie erlaubt ferner, die sofortige Wiederverwendung des nicht umgesetzten Aluminiumalkyls und des Lösungsmittels im nächsten Ansatz. In einer Folge von Ansätzen wird daher sowohl das in Form von Eis eingebrachte Wasser als auch das Aluminiumalkyl 100 Zig umgesetzt mit Ausbeuten von mehr als 90 Z löslichem und entsprechend wenig unlöslichem Alumoxan. Nebenprodukte entstehen nicht.

In einem 1 Ltr.-Glasrührautoklaven mit Temperiermantel, dessen Deckel mit einem magnetgekuppelten stopfbuchslosen Rührwerk, Temperaturfühler, verschließbaren Einfüllöffnungen sowie Gasanschlüssen ausgestattet ist und ebenfalls gekühlt werden kann, und auf dessen Rührwelle ein üblicher Impeller und zusätzlich als Schlagmesser Schneidmesser aus einem Küchenmixer montiert sind, werden eine Lösung aus 360 ml Toluol und 40 ml, entsprechend 400 mMol, Aluminiumtrimethyl unter Schutzgas (Argongegenstrom) eingefüllt. Nach Kühlung auf -80 °C werden 3,76 g auf -80 °C gekühltes Eis eingeworfen.

Die Eingabeöffnung wird verschlossen und über ein Ventil die Verbindung zur Gasmees- und Gassammeleinrichtung geöffnet. Nunmehr wird der Rührer angestellt und die Rührgeschwindigkeit gesteigert bis es zum Zerschlagen des zugefügten Eises kommt. Nach einem kleinen Gasentwicklungsstoß setzt die Reaktion mit einer Gasentwicklungsgeschwindigkeit von 1 bis 2 Ltr./Std. ein. Sobald die Gasentwicklungsgeschwindigkeit zurückgeht wird die Drehzahl noch gesteigert und die Temperatur durch Steuerung des den Kühlmantel beschickenden Thermostaten gesteigert.

Nachdem 8-9 Ltr. Gas bei Zimmertemperatur aufgefangen sind, wird der Thermostat abgeschaltet. Man läßt nun auf Raumtemperatur erwärmen. Insgesamt werden 9,5 bis 10 Ltr Gas bei Raumtemperatur aufgefangen. Das ist die theoretische Menge für den Umsatz von 3,76 ml Wasser mit einem Überschuß von Aluminiumtrimethyl. Die entstandene nahezu farblose Lösung wird über eine G4-Fritte aus dem Autoklaven in eine Vorlage gedrückt, entgast und durch Abkondensieren im Hochvakuum von überschüssigem Aluminiumtrimethyl und Toluol befreit.

Es verbleiben 16 bis 17 g eines blasigen, glasigen Materials, das sich zu einem weißen Pulver zerstoßen läßt. Dieses Material ist an der Luft selbstentzündlich und löst sich glatt in Benzol, Toluol und Cumol sowie anderen Aromaten, wenig in Methylcyclopentan und -hexan, fast gar nicht in Alkanen.

Beispiel 2

Der im Beispiel 1 genannte Rührautoklav wird in das Kältebad eingehängt; im Innern des Autoklaven wird eine Temperatur tiefer -60°C erreicht. Daraufhin wird vorsichtig Lösungsmittel und Aluminiumtrimethyl im Lösungsmittel so eingefüllt, daß eine relativ konzentrierte Lösung am Boden des Autoklaven von nahezu reinem Lösungsmittel überschichtet ist. Bei stehendem Rührer wird nun auf die Flüssigkeit das notwendige Eis gegeben, der Autoklav geschlossen und die Verbindung zur Gasmessung und Gassammlung hergestellt.

Man beginnt nun langsam zu rühren, wodurch es zu einem plötzlichen Anspringen der Reaktion kommt. Aus einem Ansatz mit 40 ml Aluminiumtrimethyl, 360 ml Toluol und 3,76 g Eis entwickeln sich bis zu 5 Ltr. Methan pro Stunde; - was sich eben noch beherrschen läßt. Es kann jedoch zu so starker Schaumbildung kommen, daß Reaktionsmasse durch die Gasableitung herausgedrückt wird. Zwischen Autoklav und Gassammelgefäß soll daher eine kühlbare Vorlage geschaltet werden.

Sobald die Gasentwicklungsgeschwindigkeit zurückgeht, wird die Rührgeschwindigkeit so gesteigert, daß Erosion und Zerkleinerung der Eispartikel einsetzen. Man steigert in Intervallen die Rührgeschwindigkeit so, daß das Schäumen gerade beherrscht wird, was bei einer Gasentwicklungsgeschwindigkeit von 3-4 Ltr./Std. der Fall ist. Kann die Rührgeschwindigkeit nicht mehr weiter gesteigert werden und läßt die Gasentwicklung deutlich nach (es sind dann ca. 8 Ltr. Gas entstanden; sollte weniger Gas entstanden sein, ist besondere Vorsicht geboten), so läßt man durch Wegnahme der Kühlflüssigkeit aber unter kräftigem Rühren im Laufe von eineinhalb bis zwei Stunden auf Zimmertemperatur erwärmen, wodurch die Reaktion vollständing wird. Die ausreagierte Lösung wird über eine G4-Fritte in eine Vorlage gedrückt.

Auf der Fritte finden sich 2-3 g einer in Aromaten unlöslichen Substanz, die ein Aluminium-Methyl-Verhältnis zwischen 1 und 2 hat. Das Filtrat wird wie in Beispiel 1 behandelt und ergibt etwa 12 g in Aromaten lösliches Methylalumoxan.

Beispiel 3 (Vergleichsbeispiel)

In einem 1 Ltr.- Dreihalskolben werden 360 ml absolutiertes Cumol und 40 ml reines Aluminiumtrimethyl vorgelegt. Der Dreihalskolben ist mit KPG-Rührer, Anschluß für Schutzgas und Gasableitung sowie einem temperierten Tropfrichter ausgestattet. Der Dreihalskolben wird auf -40°C durch Eintauchen in ein Kältebad gekühlt.

In einem separaten Gefäß werden 4 ml Wasser in 50 ml Cumol unter Kühlung auf -30°C mit Hilfe eines Ultraturrax-Rührers möglichst fein suspendiert. Dabei entstehen sehr dünne blättchenförmige Eiskriställchen die sich bei einer Temperatur oberhalb von -30°C absetzen und bei Temperatur unterhalb von -30°C aufschwimmen. Man überführt die Suspension in den auf -20°C temperierten Tropfrichter und gibt die Suspension in kleinen Portionen zu dem vorgelegten Alkyl. Die Reaktion springt sofort an und es entwickelt sich Methan und feinperliger Schaum neben geringen Mengen eines weißen Feststoffes (unlösliches Alumoxan).

Wenn die Schaumentwicklung zu heftig wird oder die Gasentwicklungsgeschwindigkeit 0.3 Ltr./Minute bei einem solchen Ansatz übersteigt, wird durch kurzes Eintauchen des dreihalskolbens in das darunterstehende Kältebad die Reaktionsgeschwindigkeit reduziert. Innerhalb einer Stunde ist alles Wasser in Form der Suspension zugefügt und es haben sich etwa 10 Ltr. Gas entwickelt. Die Temperatur im Kolben sollte zu diesem Zeitpunkt etwa -20°C betragen. Im Laufe einer Stunde läßt man auf Zimmertemperatur erwärmen, wobei sich noch wenig Gas entwickelt.

Wenn sich kontrolliert 9-10 Ltr. Gas entwickelt haben, kommt es nur bei grober Unachtsamkeit zu einer heftigen Reaktion. Während des Erwärmens bei nur noch langsamen Rühren wird die Lösung ganz klar und blank, es sedimentiert etwas unlösliches Alumoxan oder auch Aluminiumoxid. Der Ansatz wird über eine G4-fritte abgezogen und das Filtrat auf lösliches Alumoxan aufgearbeitet.

Der Filtrationsrückstand beträgt zwischen 3 und 6 g und ist bei Wasser- oder Luftzutritt heftig zersetzlich. Aus dem Filtrat werden 13-16 g Rohprodukt erhalten, das sich in Toluol glatt löst, und das als Katalysatorkomponente für lösliche Ziegler-Katalysatoren verwendet die übliche Aktivität zeigt. Es enthält noch geringe Mengen freies Aluminiumtrimethyl.

Die bei der Aufarbeitung des Filtrates anfallende Mischung von Cumol und überschüssigem Aluminiumtrimethyl kann als Ausgangslösung für einen neuen Ansatz verwendet werden, wozu lediglich mit Aluminiumtrimethyl auf einen Gehalt von 40 ml pro 400 ml Lösung angereichert zu werden braucht.

Beispiel 4

Ein in der anhängenden Figur dargestellter 2,5 Ltr. fassender röhrenförmiger Reaktor mit etwa 80 mm Innendurchmesser, der mit Kühlmantel versehen ist, ist oben und unten mit je einem Flansch verschlossen. Aus jedem Flansch ragt eine magnetgekuppelte Rührwelle in den Reaktor hinein. Der untere Rührdom ist mit Cumol gefüllt und steht lediglich über Dichtungsspalte mit dem Inhalt des Reaktors im Austausch. Auf den unteren Flansch ist ein gekühlter Ringteller so montiert, daß der waagrecht stehende Ringteller die senkrecht stehende Rührwelle umgibt und sich die Rührwelle unbeeinflußt vom Ringteller bewegen kann.

In die Vertiefung des Ringtellers wird, nachdem der Reaktor evakuiert wurde und mit Argon gefüllt ist, Wasser eingebracht und durch Einschaltung der Ringtellerkühlung tief gefroren. Auf die untere Welle wird nun oberhalb des Ringtellers ein Fräswerkzeug gesetzt, das mit einem Stift in einem Spalt der Rührwelle geführt wird. Infolgedessen reibt das Fräswerkzeug beim Drehen der Rührwelle fräsend auf der Oberfläche des tief gefrorenen Eises unabhängig von dessen Dicke.

Die vom oberen Flansch ausgehende Rührwelle und der auf ihr angebrachte Ankerrührer hat die Aufgabe den Flussigkeitsinhalt des Reaktors zu durchmischen und kann unabhängig von der unteren Rührwelle gedreht und gesteuert werden.

Der Ringteller wurde mit 7,5 g Wasser befüllt und anschließend auf 205-210°K gekühlt. Die entstehende freie Eisoberfläche beträgt in diesem Falle (konstruktionsbedingt) 41 cm². 

Nachdem die Einfrierung des Wassers abgeschlossen war, wurden 800 ml vorgekühltes Toluol (oder Cumol) eingefüllt. Der Flüssigkeitsstan über dem Rührteller ist etwa 10 cm; in die Flüssigkeit taucht der Ankerrührer auf der oberen Welle ein. Durch Beschicken des Kühlmantels wird auch die eingebrathte Flüssigkeit auf 210°K gekühlt. Auf die gekühlte Flüssigkeit werden nun 80 ml entsprechend 60 g Aluminiumtrimethyl gegeben, die sich teils lösen, teils ausfrieren und die Flüssigkeit als Kristallbrei überschichten. Nach Herstellung von Druckausgleich, Anschluß über ein Blubberventil und ein Puffergefäß an eine Gasuhr und Einführen eines Thermoelementes in die Flüssigkeit, wird zunächst durch das untere Rührwerd der Fräskopf bewegt, sodann durch das obere Rührwerk das gelöste und suspendierte Aluminiumtrimethyl in der inerten Flüssigkeit verteilt.

Es setzt eine feinblasige Gasentwicklung ein die am Ringteller ihren Ausgang nimmt. Man läßt durch Rücknahme der Kühlung die Temperatur auf 220 bis 230°K ansteigen, wobei die Gasentwiclungsgeschwindigkeit Werte bis 12 Ltr pro Stunde erreicht. Nach 3 Stunden sind 18 Ltr Gas entbunden (Zimmertemperatur). Man läßt innerhalb einer weiteren Stunde auf Zimmertemperatur erwärmen, wobei noch weitere 2 Ltr Gas entbunden werden. In der Lösung sedimentieren wenige Flöckchen. Über eine G4-Fritte wird in einen Glaskolben unter Argon gedrückt. Das Lösungsmittel wird im Vakuum abkondensiert und kann einschließlich des vorhandenen Aluminiumtrimethyls nach Ergänzung ohne weitere Aufarbeitung für den näthsten Ansatz verwendet werden.

Als Rückstand bleiben 27 g Methylalumoxan mit Spuren von Aluminiumtrimethyl.

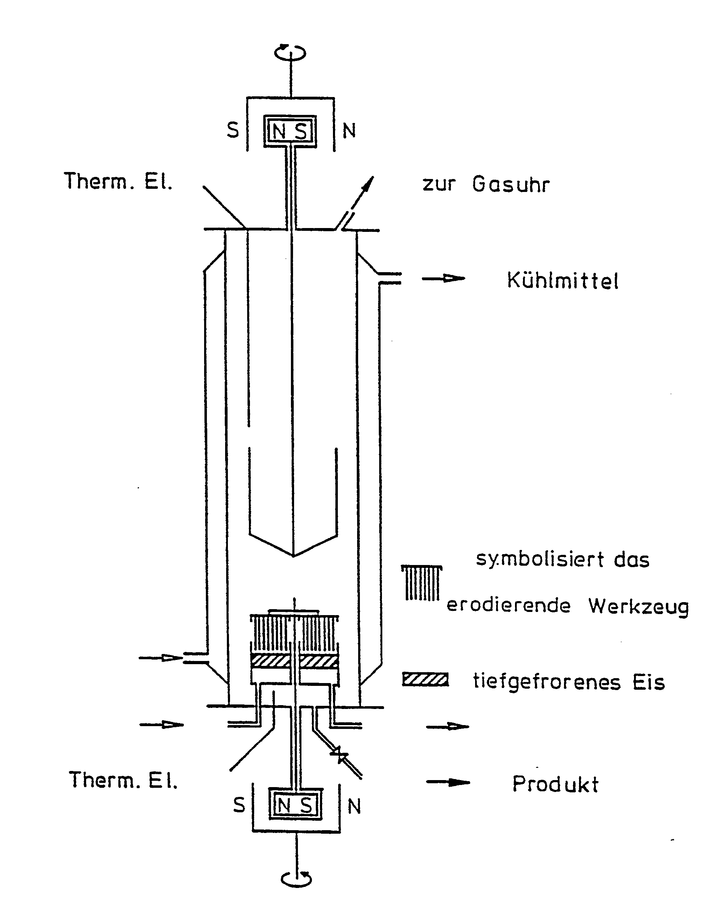

## Patentansprüche

1. Verfahren zur Herstellung von Methylaluminoxan, dadurch gekennzeichnet, daß gefrorenes Wasser in einer Lösung von Aluminiumtrimethyl in Kohlenwasserstoffen einer erodierenden Einwirkung ausgesetzt wird, die durch mechanische Einwirkung auf die Oberfläche des gefrorenen Wassers oder durch einen oder mehrere die Oberfläche des gefrorenen Wassers überstreichende intensive Flüssigkeitsstrahlen der Reaktionslösung erzeugt wird.

2. Verfahren nach Anspruch 1, dadurch gekennzeichnet, daß die mechanische Einwirkung durch schnell rotierende Schlagmesser erfolgt.

3. Verfahren nach Anspruch 2, dadurch gekennzeichnet, daß die Erosion durch reibende und fräsende Werkzeuge auf einer Oberfläche des gefrorenen Wassers erzeugt wird.

4. Verfahren nach den vorstehenden Ansprüchen, dadurch gekennzeichnet, daß als Lösung von Aluminiumtrimethyl in Kohlenwasserstoffen eine 5-15 %ige Lösung von Aluminiumtrimethyl in Toluol oder Cumol verwendet wird.

5. Verfahren nach den vorstehenden Ansprüchen, dadurch gekennzeichnet, daß die Erodierungsgeschwindigkeit und/oder die Kühlgeschwindigkeit so gesteuert werden, daß eine Innentemperatur von 250°K nicht überschritten wird und vorzugsweise eine Temperatur von 220 bis 240°K eingestellt wird und eine Temperatur von 190°K nicht unterschritten wird.

6. Verfahren nach den vorstehenden Ansprüchen, dadurch gekennzeichnet, daß die Erodierungsgeschwindigkeit und/oder die Kühlgeschwindigkeit bei einer Innentemperatur von weniger als 250°K so gesteuert werden, daß pro Stunde nicht mehr als 0,25 Mol Wasser pro Ltr Lösung erodiert und umgesetzt werden.

7. Verfahren nach den vorstehenden Ansprüchen, dadurch gekennzeichnet, daß die Mengen an Wasser und an Aluminiumtrimethyl so bemessen werden, daß bei Ende der Reaktion, d.h. nach Verbrauch des gefrorenen Wassers oder bei Beendigung der erodierende Maßbahmen, noch unumgesetztes Aluminiumtrimethyl zugegen ist, vorzugsweise 10 bis 50 g pro Liter.

8. Verfahren nach den vorstehenden Ansprüchen, dadurch gekennzeichnet, daß der gewünschte Überschuß an Aluminiumtrimethyl vorgelegt und durch Nachdosieren in dem Maße wie das Aluminiumtrimethyl verbraucht wird, aufrecht erhalten wird.

## Claims

1. Process for the production of methylaluminium oxane, characterised in that frozen water in a solution of trimethylaluminium in hydrocarbons is subjected to erosive action produced by means of mechanical action on the surface of the frozen water or by means of one or more intensive liquid jets of the reaction solution sweeping over the surface of the frozen water.

2. Process according to claim 1, characterised in that the mechanical action is exerted by rapidly rotating beater blades.

3. Process according to claim 2, characterised in that the erosion is effected by reaming and milling tools on a surface of the frozen water.

4. Process according to the preceding claims, characterised in that a 5 to 15 % solution of trimethylaluminium in toluene or cumene is used as the solution of trimethylaluminium in hydrocarbons.

5. Process according to the preceding claims, characterised in that the rate of erosion and/or the rate of cooling are or is so controlled that an internal temperature of 250°K is not exceeded and, preferably, a temperature of from 220 to 240°K is established and the temperature does not fall below 190°K.

6. Process according to the preceding claims, characterised in that the rate of erosion and/or the rate of cooling is or are so controlled at an internal temperature of less than 250°K that not more than 0.25 mole of water per litre of solution is eroded and reacted per hour.

7. Process according to the preceding claims, characterised in that the quantities of water and of trimethylaluminium are so selected that, at the end of the reaction, that is to say after the frozen water has been consumed or the erosive measures have ceased, unreacted trimethylaluminium is still present, preferably from 10 to 50 g per litre.

8. Process according to the preceding claims, characterised in that the desired excess of trimethylaluminium is introduced initially and is maintained by being replenished at the rate at which the trimethylaluminium is consumed.

## Revendications

1. Procédé pour la préparation de méthylaluminoxane, caractérisé en ce que de l'eau congelée est, dans une solution de triméthylaluminium dans des hydrocarbures, soumise à un effet d'érosion, qui est produit par une action mécanique sur la surface de l'eau congelée, ou par un ou plusieurs jets liquides de la solution réactionnelle, intenses, qui balayent la surface de l'eau congelée.

2. Procédé selon la revendication 1, caractérisé en ce que l'action mécanique est réalisée par un couteau frappeur à grande vitesse de rotation.

3. Procédé selon la revendication 2, caractérisé en ce que l'érosion est réalisée par des outils abrasifs et à effet de fraisage sur une surface de l'eau congelée.

4. Procédé selon les revendications précédentes, caractérisé en ce qu'on utilise comme solution de triméthylaluminium dans des hydrocarbures une solution à 5-15 % de triméthylaluminium dans du toluène ou du cumène.

5. Procédé selon les revendications précédentes, caractérisé en ce que la vitesse d'érosion et/ou la vitesse de refroidissement sont commandées de façon que la température intérieure ne dépasse pas 250 K, et qu'on ajuste de préférence une température de 220 à 240 K, la température ne passant pas en-dessous de 190 K.

6. Procédé selon les revendications précédentes, caractérisé en ce que la vitesse d'érosion et/ou la vitesse de refroidissement est, pour une température intérieure inférieure à 250 K, régulée de façon que pas plus de 0,25 mole d'eau par litre de solution ne soit érodée et convertie par heure.

7. Procédé selon les revendications précédentes, caractérisé en ce que les quantités d'eau et de triméthylaluminium sont définies de façon que, à la fin de la réaction, c'est-à-dire après consommation de l'eau congelée ou après la fin des opérations d'érosion, il reste encore du triméthylaluminium intact, de préférence 10 à 50 g/l.

8. Procédé selon les revendications précédentes, caractérisé en ce que l'on part de l'excès souhaité de triméthylaluminium, et qu'on le maintient en le complétant au fur et à mesure de la consommation du triméthylaluminium.

Therm. El.

zur Gasuhr

Kühlmittel

sy.mbolisiert das

erodierende Werkzeug

tiefgefrorenes Eis

Therm. El.

Produkt